Europäisches Patentamt

European Patent Office

Office européen des brevets

(19)

(11) Numéro de publication: **0 178 224**
**A1**

## (12) DEMANDE DE BREVET EUROPEEN

(21) Numéro de dépôt: 85401936.1

(22) Date de dépôt: 04.10.85

(51) Int. Cl.⁴: **F 16 L 37/28**

(30) Priorité: 11.10.84 FR 8415582

(43) Date de publication de la demande: **16.04.86**
**Bulletin 86/16**

(84) Etats contractants désignés: **DE GB IT NL SE**

(71) Demandeur: **Appareillages et Matériels de Servitudes (A M S) Société anonyme, 12, Rue de Chevilly La Cerisale 108/112, F-94262 Fresnes Cédex (FR)**

(72) Inventeur: **Hellouin de Menibus, Olivier, 13, rue du Pont Saint Jean, F-91150 Etampes (FR)**

(74) Mandataire: **Flavenot, Bernard, Société ABRITT 17, rue du Docteur Charcot La Norville, F-91290 Arpajon (FR)**

(54) **Raccord auto-obturateur.**

(57) La présente invention concerne les raccords auto-obturateurs.

Le raccord auto-obturateur selon l'invention comportant au moins un conduit, au moins un orifice d'extrémité, un clapet coulissant pour obturer ledit orifice, est essentiellement caractérisé par le fait que ledit orifice 11, 28, 29, 32 est délimité par au moins deux lignes d'étanchéité 17, 26 disposées sur une courbe fermée appartenant chacune respectivement à deux surfaces cylindriques de même direction de génératrices et que ledit clapet 12 coulissant a au moins deux surfaces d'étanchéité appartenant respectivement auxdites surfaces cylindriques, la projection des sections du clapet coopérant respectivement avec les deux dites lignes sur un plan perpendiculaire P à ladite génératrice ayant des valeurs égales S'₁, S'₂.

Application: raccords pour conduites transportant un fluide, utilisés notamment dans les milieux sous-marins.

RACCORD AUTO-OBTURATEUR 0178224

La présente invention concerne les raccords auto-obturateurs, c'est-à-dire les raccords pour conduites de fluide qui permettent de raccorder deux embouts de conduites dans lesquelles se trouve éventuellement un fluide sous pression, sans avoir à vider ces conduites, tout en évitant des pertes de fluide et des entrées de fluide de l'atmosphère ambiante, comme par exemple de l'air ou de l'eau salie si l'opération doit s'effectuer dans un milieu marin.

Les raccords auto-obturateurs sont bien connus et sont utilisés dans beaucoup de domaines, et notamment dans ceux nécessitant une haute sécurité, comme par exemple le domaine aéronautique, pour tout ce qui concerne les commandes fluidiques d'un aéronef et leur vérification.

Un tel raccord se compose essentiellement d'un conduit réalisé dans un corps, le conduit étant terminé par un orifice conformé en siège, d'un clapet coulissant à l'intérieur du conduit sur lequel agit un ressort de pression qui tend à maintenir le clapet contre le siège. Il existe donc très schématiquement un raccord que l'on pourrait qualifier de "mâle", et un autre de "femelle", complémentaire du mâle. Ces deux raccords sont donc fermés, chacun par son clapet respectif, quand ils sont découplés. Dans ces conditions, aucun fluide ne peut s'échapper des conduites auxquelles ils sont associés et, bien entendu, aucune impureté gazeuse, solide, ou liquide, ne peut y pénétrer.

Quand il est nécessaire de raccorder les deux embouts, leurs extrémités respectives sont appliquées avec une force de pression l'une contre l'autre, ce qui fait que, dans une première étape, un des deux clapets est repoussé pour libérer le fluide sous pression qui se trouve dans sa conduite et, dans une seconde étape, le fluide sous pression ainsi libéré exerce une force de pression sur l'autre clapet et le repousse à son tour, ce qui fait que

- 2 - 0178224

ce second clapet libère à son tour l'orifice auquel il est associé. Cette dernière opération peut s'effectuer aussi mécaniquement. Il existe, d'autre part, des moyens d'auto-blocage de ses deux raccords entre eux, pour assurer leur maintien l'un avec l'autre, et éviter qu'ils se désolidarisent accidentellement.

En conséquence de ce qui a été décrit succinctement ci-dessus, les deux clapets des deux raccords étant dissociés de leurs sièges respectifs, une continuité fluidique est assurée entre les deux conduites à abouter et le raccordement des deux conduites est donc effectué avec les avantages mentionnés ci-dessus.

Cependant, dans certains cas d'utilisation, ces raccords présentent un inconvénient important. En effet, il arrive que les raccords tels que décrits ci-dessus, avec des caractéristiques données, soient utilisés dans des milieux où règne une pression ambiante importante, telle qu'elle puisse atteindre une valeur qui fait que la force résultante s'exerçant sur la face du clapet soumise à ce milieu peut entraîner le déplacement de celui-ci et le repousser vers l'intérieur de la conduite, à l'encontre des forces exercées par le ressort et aussi par le fluide sous pression contenu dans la conduite. Tel peut être le cas, par exemple, des raccords auto-obturateurs utilisés dans un milieu tel que le milieu sous-marin, en profondeur.

La présente invention a pour but de pallier cet inconvénient et de réaliser un raccord auto-obturateur du type à clapets glissants qui soit insensible à la pression du milieu ambiant dans lequel il doit assurer sa fonction.

Plus précisément, la présente invention concerne un raccord auto-obturateur comportant au moins un conduit, un orifice d'extrémité, un clapet coulissant pour obstruer ledit orifice, caractérisé par le fait que

- ledit orifice est délimité par au moins deux lignes d'étanchéité disposées sur une courbe fermée, appartenant

chacune respectivment à deux surfaces cylindriques de même direction de génératrice, et que

- ledit clapet coulissant a au moins deux surfaces d'étanchéité appartenant respectivement auxdites surfaces cylindriques, la projection des sections du clapet coopérant respectivement avec les deux dites lignes, sur un plan perpendiculaire à ladite génératrice, ayant des valeurs égales.

D'autres caractéristiques et avantages de la présente invention apparaîtront au cours de la description suivante faite en regard des dessins annexés à titre illustratif, mais nullement limitatif, dans lesquels :

- la FIGURE 1 représente, vu en coupe, un premier mode de réalisation d'un raccord auto-obturateur selon l'invention,

- la FIGURE 2 représente, vu en coupe, un deuxième mode de réalisation d'un raccord auto-obturateur selon l'invention, associable au raccord selon la FIGURE 1.

- la FIGURE 3 représente, vus en coupe, deux raccords selon les FIGURES 1 et 2 en association.

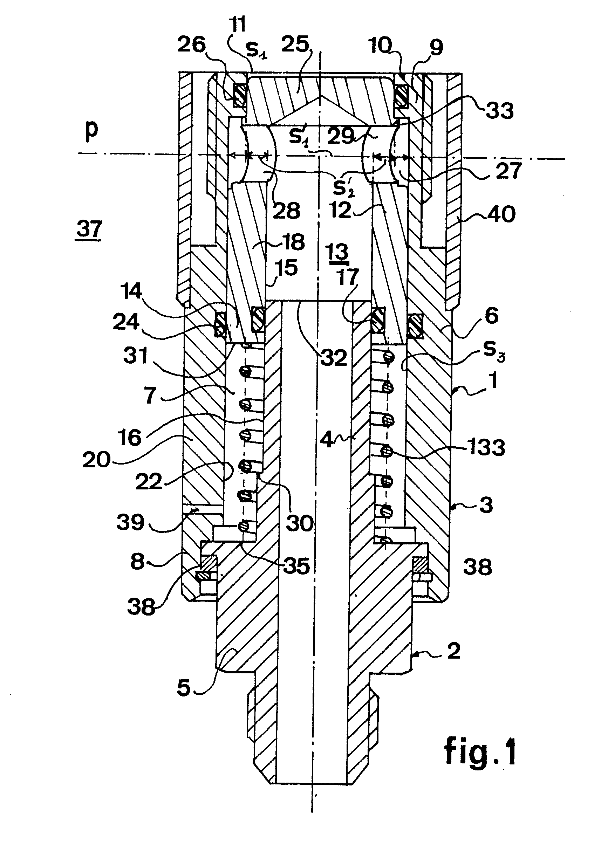

En revenant plus particulièrement à la FIGURE 1, celle-ci représente, vu en coupe, un raccord auto-obturateur 1 pour conduite d'un fluide tel que, par exemple, de l'huile sous pression.

Ce raccord comprend un corps qui, dans cet exemple, est réalisé en deux parties 2 et 3. Une première partie intérieure comprend une pièce avantageusement cylindrique de révolution formant un canon 4 solidaire d'une embase 5 sur laquelle peut se raccorder une tuyauterie de la canalisation qui sera à abouter à une autre canalisation. Une deuxième partie extérieure 3, sous la forme générale d'un manchon 6, entoure le canon et dépasse largement de celui-ci, le manchon formant avec le canon 4 et l'embase 5 une gorge circulaire 7 fermée à une extrémité par l'embase 5. Le manchon 6 est solidarisé à une de ses extrémités 8, par exemple par trois moyens de fixations, avec l'embase 5. Son autre extrémité 9 comporte une partie rentrante 10 en saillie pour délimiter une entrée 11, dans cet exemple de réalisation, de forme circulaire ayant une section $S_1$ qui est sensiblement égale à la section centrale $S_3$ intérieure du manchon 6, en 20.

Ce raccord comporte en outre un clapet 12 en forme de capuchon ayant une cavité intérieure 13 ouverte à une extrémité 14 dont le diamètre de la surface intérieure 15 est égal au diamètre de la surface extérieure 16 du canon 4, du moins de façon mécanique pour obtenir un glissement du clapet sur ce canon avec étanchéité au moyen, par exemple, d'un joint d'étanchéité 17 définissant une ligne d'étanchéité. La surface extérieure de la partie 18 latérale du clapet a une surface définie de façon que son diamètre extérieur soit égal de façon mécanique à la section $S_3$ de la surface intérieure 22 de cette partie centrale 20. Le clapet peut donc glisser avec étanchéité contre cette surface 22, l'étanchéité étant obtenue, par exemple, par un joint 24.

Le fond 25 du capuchon formant le clapet 12 a une section égale à celle de la section $S_1$ de l'entrée 11 définie ci-dessus et peut ainsi glisser, par l'intermédiaire d'un joint d'étanchéité 26 définissant une deuxième ligne d'étanchéité. Le clapet comporte un rétrécissement latéral 27 réalisé dans la partie latérale 18, à proximité de son fond 25, et dans cette partie sont réalisés des moyens de communication fluidique, comme des percées 28, 29, traversant la paroi latérale 18 du capuchon-clapet 12.

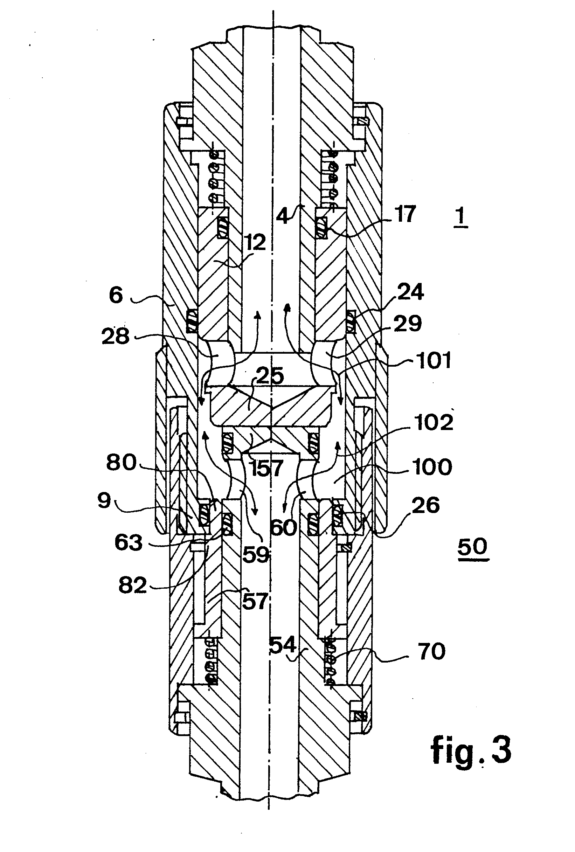

Le clapet 12 tel que défini ci-dessus est amené à glisser entre au moins deux positions qui sont respectivement définies par deux butées. La première est une butée réalisée sur le canon 4 et constituée par un rétreint 30 réalisé sensiblement à l'extrémité du canon 4 se situant vers l'embase 5 de façon que, lorsque le clapet est amené à glisser contre ce canon, sa surface circulaire d'extrémité 31 vienne buter contre la partie en saillie 30 et définisse ainsi une position du clapet dite "ouverte", comme il apparaîtra notamment sur la FIGURE 3, de façon que le fond 25 ait libéré l'entrée 11 mais que, par contre, les deux percées 28 et 29 soient à un niveau situé juste avant l'entrée 32 du canon 4.

La deuxième position du clapet dite d'obturation, illustrée sur la FIGURE 1, est constituée par un rétreint 33 réalisé sur le clapet 12. En fait ce rétreint est obtenu par la différence de diamètre entre le fond 11 de section $S_1$ et le rétrécissement 27 tel que défini ci-dessus qui a un diamètre supérieur à celui du fond 11 mais inférieur au diamètre extérieur du clapet, c'est-à-dire, en fait, la section $S_3$.

A ce clapet 12 sont associés des moyens pour lui appliquer une force élastique tendant à lui faire prendre la position telle qu'illustrée sur la FIGURE 1, c'est-à-dire celle où son fond 25 obstrue de façon étanche l'entrée 11 du manchon 6. Ces moyens pour exercer une force élastique sont avantageusement constitués par un ressort de compression 133 situé dans la gorge circulaire définie ci-dessus et appliquant ses deux extrémités respectivement sur l'embase 5 et la face 31 du clapet. Ce ressort s'appuie donc par son extrémité 34 contre le fond 35 de la gorge circulaire 7 et par son autre extrémité 36 contre la surface 31 du clapet 12. Ce ressort exerce donc une force qui tend à maintenir le clapet de façon que la butée 33 soit constamment appliquée contre la partie rentrante 10 définie précédemment.

Dans ce manchon 6 sont réalisés des moyens pour mettre en communication la gorge circulaire 7 avec le milieu extérieur 37 dans lequel doit être positionné ou utilisé un tel raccord auto-obturateur. Généralement, ces moyens de communication sont obtenus par des raccords non

- 6 -                    0178224

étanches entre le manchon 6 et l'embase 5, ce qui permet à l'atmosphère contenue dans le milieu 37 de pouvoir passer à travers les interstices 38 entre ces deux éléments. 'Cependant, dans un souci de clarification et de bien montrer la fonction de ces moyens de communication, ceux-ci ont été représentés par un orifice 39 réalisé dans la paroi du manchon 6, cet orifice 39 pouvant être avantageusement muni d'un filtre, pour éviter l'entrée de corps étrangers dans la gorge 7.

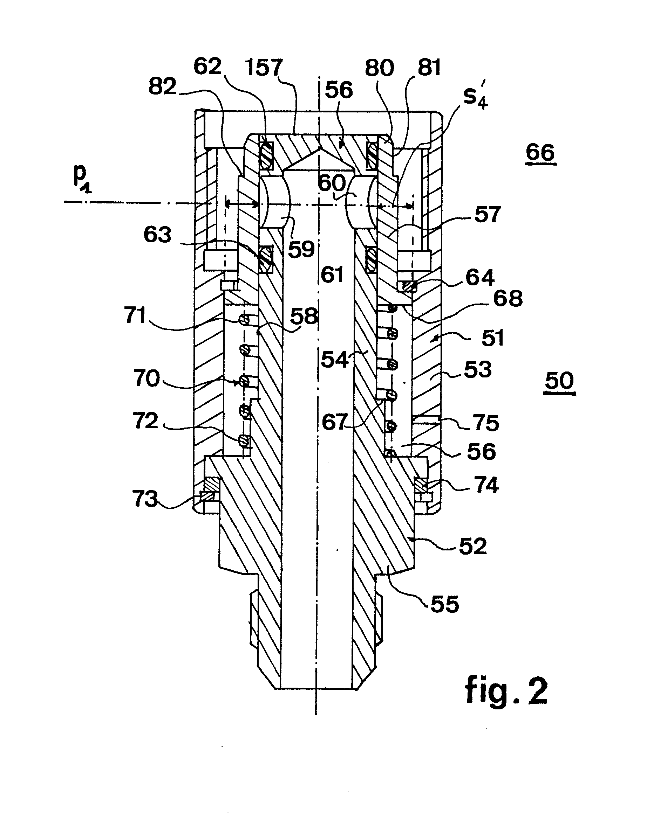

Enfin, sur la surface extérieure de ce manchon 6 peuvent être disposés des moyens pour associer un tel raccord obturable avec un autre comme celui illustré sur la FIGURE 2, ces moyens pouvant être constitués par exemple par un anneau de verrouillage 40. Cet anneau ne sera pas plus amplement décrit, étant donné qu'il est connu en lui-même et déjà utilisé dans les raccords obturables de l'Art antérieur.

Comme il a été mentionné au préambule, un tel raccord obturable est conçu pour pouvoir être utilisé en tout milieu ambiant 37 et quelle que soit la pression règnant dans ce milieu par rapport à celle qui règne dans la conduite qui est connectée à un tel raccord obturable. Aussi, pour éviter que ce clapet 12 ne s'ouvre sous l'effet de cette pression, ce clapet 12 est-il conçu comme explicité ci-après.

On considère d'abord que la section efficace sur laquelle s'applique la pression atmosphérique par le fond 25 a une valeur qui est égale à une section $S'_1$. Cette section $S'_1$ est définie par la projection de la section définie notamment par la deuxième ligne d'étanchéité (joint 26) sur un plan P perpendiculaire aux génératrices formant l'ensemble des pièces cylindriques définies ci-dessus, c'est-à-dire le canon, la partie latérale du clapet et la partie intérieure 22 du manchon 6.

On considère alors maintenant que la section efficace de l'autre fond du clapet défini par la première ligne d'étanchéité donnée par le joint 17 est obtenue par projection de ce fond sur le même plan P et a une valeur $S'_2$.

Pour que les forces appliquées par la pression de l'atmosphère ambiante sur les deux faces s'annulent, il est nécessaire que les deux surfaces des sections $S'_1$ et $S'_2$ soient égales. Les efforts transversaux sont absorbés par les surfaces transversales du manchon et du canon, et donc n'interviennent pas.

De cette façon, les forces s'exerçant respectivement sur les deux faces extrêmes 25 et 31 du clapet sont égales et le clapet est alors parfaitement équilibré et ne subit aucun déplacement dû à l'atmosphère dans laquelle il est placé. Seule s'applique sur ce clapet la pression qui peut régner à l'intérieur du canon 4 et de la cavité 13 tels que définis précédemment, et celle engendrée par le ressort 133 mentionné précédemment.

Le raccord qui vient d'être décrit ci-dessus possède donc une entrée définie par les deux lignes d'étanchéité définies respectivement par les deux joints 26 et 17 qui peuvent être obturées par le clapet 12 moyennant une troisième ligne de coopération avec le joint d'étanchéité 24.

Il est bien concevable qu'un tel raccord soit associable à un autre raccord auto-obturable.

Un raccord obturable pouvant coopérer avec un raccord tel qu'illustré sur la FIGURE 1 est illustré sur la FIGURE 2. Ce raccord présente lui aussi les mêmes avantages que celui de la FIGURE 1, c'est-à-dire qu'il est parfaitement équilibré.

Le clapet auto-obturable 50 illustré sur la FIGURE 2 comprend deux parties 51 et 52, la partie extérieure 51 constituée par un manchon 53 et la partie intérieure 52 constituée par un canon 54 associé à une embase 55. Le manchon 53 et le canon 54 forment une gorge circulaire 56 telle que celle définie précédemment dans laquelle est apte à coopérer par glissement un clapet 57 de forme avantageusement circulaire de révolution. Dans cet exemple de réalisation, le canon 54 est obturé à son extrémité 56 par un fond 57 ayant une section identique à celle de la surface extérieure 58 de ce canon 54. Cependant, à cette extrémité 56, juste avant le fond 57, sont réalisées des percées telles que des percées 59 et 60 permettant de mettre en communication l'intérieur 61 de ce canon 54 avec l'intérieur de la gorge circulaire 56.

Ces deux percées 59 et 60 illustrées sur la FIGURE 2 sont comprises entre deux lignes d'étanchéité respectivement définies sur deux surfaces cylindriques par deux joints 62 et 63 sur lesquels glisse le clapet 57.

Ce clapet est défini de façon qu'il puisse prendre au moins deux positions, une première position dite d'obturation telle qu'illustrée sur la FIGURE 2 qui est définie par une première butée 64 constituée par un anneau enclipsé dans la surface intérieure du manchon 53, cette première position définissant la position du clapet 57 pour que sa surface intérieure 65 soit simultanément en coopération avec les deux lignes d'étanchéité définies par les deux joints 62 et 63 et que, de ce fait, les deux orifices 59 et 60 soient obturés par ce clapet 57. L'intérieur 61 du canon 54 ne peut pas alors être mis en communication avec l'atmosphère ambiante de l'extérieur 66.

La deuxième position du clapet 57 dite d'ouverture est définie par une partie en saillie 67 contre laquelle peut venir buter la surface 68 extrême du clapet 57. Dans cette position, le clapet libère les orifices 59 et 60 et peut laisser ainsi un libre passage entre l'intérieur 61 du canon 54 et l'intérieur de la gorge 56.

A ce clapet 57, sont associés des moyens pour lui exercer une force élastique tendant à le maintenir constamment contre la butée 64, c'est-à-dire en positon d'obturation des deux orifices 59 et 60. Ces moyens sont constitués par un ressort de pression 70 disposé à l'intérieur de la gorge circulaire 56 mentionnée précédemment, les deux extrémités respectives 71 et 72 de ce ressort 70 s'appliquant respectivement contre la surface 68 du clapet 57 et le fond 73 de la gorge 56.

Comme précédemment, la gorge 56, et plus particulièrement sa partie comprise entre la surface 68 du clapet 57 et le fond 73 est mise en communication avec le milieu ambiant 66, cette mise en communication pouvant se faire par une jonction non étanche 74 entre le manchon 53 et l'embase 52 mentionnés précédemment, ou aussi par un orifice réalisé directement dans la paroi de ce manchon 53 tel que l'orifice 75 qui met ainsi en communication l'intérieur de la gorge circulaire 56 avec le milieu ambiant 66 dans lequel est situé un tel raccord auto-obturateur. Comme précédemment l'orifice 39, cet orifice 75 peut être avantageusement muni d'un filtre, pour éviter l'entrée de corps étrangers dans la gorge 56.

De même que précédemment, un tel clapet ne doit pas être soumis à la pression du milieu ambiant dans lequel il est situé, pour éviter son ouverture intempestive et le passage d'impuretés ou de fluide indésiré à l'intérieur du manchon 61, ou vice-et-versa, pour éviter qu'un fluide contenu dans cette canalisation débouchant dans le canon 61 puisse s'échapper vers le milieu ambiant à travers les orifices 59 et 60 qui seraient ouverts.

Pour cela, et comme précédemment, les sections agissant respectivement sur les deux lignes d'étanchéité définies par les deux joints 62 et 63 du clapet, projetées sur un plan $P_1$ perpendiculaire aux génératrices formant les parties cylindriques de révolution, notamment la surface extérieure du canon 54 et la surface intérieure du clapet 57, se projettent suivant des sections ayant des valeurs égales. Avec cette structure de clapet associé au canon 54, ces deux sections sont deux sections annulaires $S'_4$ stric-

tement identiques qui permettent donc ainsi au clapet d'être parfaitement équilibré, et donc de ne pas subir l'action de la pression du milieu ambiant, puisque la pression du milieu ambiant s'applique identiquement sur les deux faces opposées qui sont respectivement perpendiculaires à la direction des génératrices telle que définie précédemment, notamment grâce à l'orifice 75 qui permet à l'atmosphère de pénétrer dans la gorge 56.

Comme mentionné précédemment, ce raccord auto-obturateur est destiné à coopérer avec un autre raccord auto-obturateur comme celui illustré sur la FIGURE 1. Pour cela l'extrémité 80 du clapet 57 a un diamètre extérieur défini sur sa surface 81 égale à la section d'entrée 11 définie selon la raccord de la FIGURE 1 et présente, à une distance sensiblement inférieure à l'épaisseur de la partie rentrante 10 définie précédemment une butée 82 destinée à venir coopérer avec la surface extérieure de cette partie rentrante 10 pour pouvoir, comme il sera explicité ci-après, agir sur le clapet 57 et le retenir. Cette fonction sera plus amplement décrite en regard notamment de la FIGURE 3 qui représente le résultat d'une association de deux raccords auto-obturateurs tels que décrits précédemment en regard des FIGURES 1 et 2.

En conséquence, pour associer deux raccords tels que le raccord 1 et le raccord 50 on présente leurs extrémités en regard l'une de l'autre de telle façon que l'extrémité 57 du canon 54 vienne se placer contre la surface extérieure du fond 25. Puis, par une pression exercée par exemple manuellement, on fait pénétrer l'extrémité 9 du manchon 6 dans l'extrémité de la gorge 56, et l'extrémité 80 du clapet 57 pénètre dans l'orifice d'entrée 11 en venant coopérer respectivement par butée contre le fond 25 et la surface 81 extérieure du clapet 57 contre le joint d'étanchéité 26, et cela jusqu'à ce que la butée 82 vienne au contact de la partie rentrante 10 du manchon extérieur 6. Ensuite, en continuant la pression sur le raccord 50 par rapport au raccord 1, on continue à faire pénétrer le canon 54 et à repousser le clapet 12. De cette façon, la clapet 57 glisse sur le canon 54 à l'encontre de l'effort exercé par le ressort 70 et ainsi, les deux orifices 59 et 60 sont ouverts, ce qui permet le libre passage dans l'espace 100 défini dans le gorge 7. De même, comme le clapet 12 est repoussé du joint d'étanchéité 26 il se produit un passage de fluide de l'espace 100 vers l'intérieur du canon 4. Les chemins pris par le fluide sont représentés par les flèches 101 et 102. On voit que les chemins 101 et 102 définis entre les deux canons 4 et 54 sont parfaitement étanches, délimités par les joints d'étanchéité 63, 26 et 24.

Bien entendu, l'extrémité du manchon 53 est définie mécaniquement pour qu'il vienne se positionner entre l'anneau de verrouillage 40 et la surface extérieure d'extrémité du manchon 6 pour obtenir ainsi de façon classique une sécurité d'accrochage de ces deux raccords auto-obturateurs 1 et 50 l'un avec l'autre.

R E V E N D I C A T I O N S

1. Raccord auto-obturateur comportant au moins un conduit, au moins un orifice d'extrémité audit conduit, un clapet coulissant coopérant avec ledit orifice suivant au moins une ligne d'étanchéité sur une surface cylindrique, CARACTERISE PAR LE FAIT QUE :
- ledit orifice (11,100,28,29,32 - 59, 60) est délimité par au moins deux lignes d'étanchéité (17,26 - 62,63) disposées sur une courbe fermée, appartenant chacune respectivement à deux surfaces cylindriques de même direction de génératrices, et que :
- ledit clapet (12 - 57) a au moins deux surfaces d'étanchéité appartenant respectivement auxdites surfaces cylindriques, les deux dites surfaces d'étanchéité étant aptes à coulisser respectivement sur les deux dites lignes d'étanchéité, la projection des sections du clapet coopérant respectivement avec les deux dites lignes sur un plan perpendiculaire (P - P1) à ladite génératrice ayant des valeurs égales (S'1,S'2 - S'4).

2. Raccord selon la revendication 1, CARACTERISE PAR LE FAIT QUE les deux surfaces cylindriques de même direction de génératrices sont constituées respectivement par la surface extérieure d'un canon (4) et la surface intérieure d'une partie rentrante (10) d'un manchon (6) entourant et débordant ledit canon (4), le manchon et ledit canon définissant une gorge cylindrique (7), et qu'il comprend des moyens (39,38) de mise à l'atmosphère ambiante de ladite gorge.

3. Raccord selon la revendication 2, CARACTERISE PAR LE FAIT QUE ledit clapet affecte la forme d'un capuchon définissant une cavité (13) intérieure délimitée par une surface latérale (18) et un fond (25), ledit clapet coopérant par glissement de façon que la surface latérale coulisse dans ladite gorge et telle que la surface intérieure coopère avec la surface extérieure dudit canon au moyen d'un premier joint d'étanchéité (17) et que sa surface extérieure coopère avec la surface intérieure dudit manchon par l'intermédiaire d'un joint d'étanchéité (24), la surface extérieure du fond (25) coopérant avec la surface extérieure de ladite partie rentrante (9) au moyen d'un joint d'étanchéité (26).

4. Raccord selon la revendication 3, CARACTERISE PAR LE FAIT QU'il comporte au moins deux butées (30,33) définissant deux positions dudit clapet (12), une position d'ouverture dudit orifice et une position d'obturation dudit orifice.

5. Raccord selon la revendication 4, CARACTERISE PAR LE FAIT QU'il comporte des moyens (133) pour exercer une force élastique sur ledit clapet pour tendre à le maintenir dans sa position d'obturation dudit orifice.

6. Raccord selon la revendication 1, CARACTERISE PAR LE FAIT QUE les deux surfaces cylindriques de même direction de génératrices sont constituées respectivement par deux portions de surface situées de part et d'autre d'au moins un orifice (59,60) réalisé sur la paroi latérale extérieure d'un canon cylindrique (54) obturé par un fond (57).

7. Raccord selon la revendication 6, CARACTERISE PAR LE FAIT QUE ledit clapet affecte la forme d'une pièce cylindrique de révolution coulissant sur la surface cylindrique extérieure dudit canon (54), de façon à coopérer respectivement avec deux joints d'étanchéité (62, 63) définissant deux lignes d'étanchéité respectivement sur les deux dites portions de surface dudit canon (54).

8. Raccord selon la revendication 7, CARACTERISE PAR LE FAIT QU'il comporte au moins deux butées (64, 67) définissant deux positions dudit clapet (54), une position d'ouverture dudit orifice (59, 60) et une position d'obturation dudit orifice (59, 60).

9. Raccord selon la revendication 8, CARACTERISE PAR LE FAIT QU'il comporte des moyens (70) pour exercer une force élastique sur ledit clapet pour tendre à le maintenir dans sa position d'obturation dudit orifice (59, 60).

10. Raccord selon la revendication 9, CARACTERISE PAR LE FAIT QU'il comporte un manchon (53) entourant ledit canon (54) et ledit clapet (57).

0178224

fig.1

0178224

fig. 2

0178224

fig.3

**Office européen des brevets**

## RAPPORT DE RECHERCHE EUROPEENNE

### DOCUMENTS CONSIDERES COMME PERTINENTS

| Catégorie | Citation du document avec indication. en cas de besoin, des parties pertinentes | Revendication concernee | CLASSEMENT DE LA DEMANDE (Int Cl 4) |
|---|---|---|---|
| X | GB-A-2 117 073 (EKMAN) * Page 2, lignes 23-79; figures * | 1 | F 16 L 37/28 |
| A | | 2,3,5, 6 | |
| | --- | | |
| P,A | EP-A-0 122 404 (MOMBERG) * Figures * | 1,4,5, 8-10 | |
| | ----- | | |

| | DOMAINES TECHNIQUES RECHERCHES (Int. Cl.4) |
|---|---|
| | F 16 L |

Le présent rapport de recherche a été établi pour toutes les revendications

| Lieu de la recherche | Date d'achèvement de la recherche | |
|---|---|---|
| LA HAYE | 16-12-1985 | HUBEAU M.G. Examinateur |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant